# EUROPEAN PATENT APPLICATION

(11) **EP 2 515 225 A2**
(43) Date of publication of application: **24.10.2012**
(21) Application number: 12163501.5
(22) Date of filing: 06.04.2012
(51) Int. Cl.: G06F 3/14

(54) **Method of emulating a controller pilot data link communication human machine interface**

(30) Priority: 19.04.2011 US 201113089431
(71) Applicant: Honeywell International Inc., NJ 07962-2245 (US)
(72) Inventor: Ludwig, Patrick, Morristown, New Jersey 07962-2245 (US); Judd, Thomas D., Morristown, New Jersey 07962-2245 (US); Rao, Karthik, Morristown, New Jersey 07962-2245 (US); Gangwar, Neeraj K., Morristown, New Jersey 07962-2245 (US)
(74) Representative: Houghton, Mark Phillip

(57) **Abstract**

A computing-platform emulator for use on a vehicle is provided. The computing-platform emulator includes a display, a processor communicatively coupled to the display, a data-entry interface communicatively coupled to the processor, and at least one electronic interface to interface a host system in the vehicle to the processor. The host system implements at least one application and at least one protocol for use on the computing-platform emulator. The display, the data-entry interface, and the at least one electronic interface function as a multifunction control display unit.

## Description

### BACKGROUND

Currently available communication management unit (CMU) controller pilot data link communication (CPDLC) systems and flight management system (FMS) CPDLC systems typically display the CPDLC application on a multipurpose control display unit (MCDU) which is located in the cockpit console of an aircraft. The cockpit console and the display in the MDCU are to the side of and down from a forward-field area of the cockpit. Thus, the flight crew needs to look down or to the side of the forward-field area to use the CPDLC application on the MCDU.

The need for a pilot to look down and to the side in order to view a CPDLC message adversely affects the speed of viewing the message. The need for a pilot to look down and to the side in order to view a CPDLC message also distracts the pilot from the view in front of the aircraft. In some cases, the reduced speed in viewing of messages and/or the distraction from looking down creates a safety issue for the aircraft and those on board the aircraft.

### SUMMARY

The present application relates to a computing-platform emulator for use on a vehicle. The computing-platform emulator includes a display, a processor communicatively coupled to the display, a data-entry interface communicatively coupled to the processor, and at least one electronic interface to interface a host system in the vehicle to the processor. The host system implements at least one application and at least one protocol for use on the computing-platform emulator. The display, the data-entry interface, and the at least one electronic interface function as a multifunction control display unit.

### DRAWINGS

Figure 1 is a block diagram of one embodiment of a computing-platform emulator in a vehicle in accordance with the present invention;

Figure 2 is a block diagram of one embodiment of multifunction-control-display-unit emulator in a cockpit in communication with ground systems in accordance with the present invention; and

Figure 3 is a method to install at least one avionics application in a multifunction-control-display-unit emulator.

In accordance with common practice, the various described features are not drawn to scale but are drawn to emphasize features relevant to the present invention. Like reference characters denote like elements throughout figures and text.

### DETAILED DESCRIPTION

In the following detailed description, reference is made to the accompanying drawings that form a part hereof, and in which is shown by way of illustration specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

The embodiments of emulators described herein provide human-machine interface (HMI) device emulation and permit the use of a CPDLC application in a display positioned in a forward-field area of the cockpit. Since the emulated HMI device (e.g., an MCDU emulator) appears identical to the physical HMI device (e.g., an MCDU), changes to the host system (e.g., a CMU or FMS) are not required. The described embodiments of emulators support protocols that typically reside in the CMU or FMS. The emulators can be hosted on an electronic flight bag in an aircraft. The embodiments of emulators described herein also provide human-machine interface (HMI) device emulation and permit the use of other types applications in a display positioned in a forward-field area of the cockpit. The other applications include, but are not limited to, airline operational control (AOC) applications, air traffic control (ATC) applications, radio management applications, central maintenance computer applications, aircraft condition monitoring system applications, other avionics applications, and other maintenance applications.

The embodiments described herein resolve the potential safety issue which arises from the crew member looking down at a MCDU since the emulated HMI device is operably placed in the forward-field area of the cockpit. The forward-field area of the cockpit is that area in the cockpit toward which the pilot is looking when viewing the scene in front of the aircraft. Specifically, the bottom edge of the forward-field area of the cockpit begins at the top of the consol in front of the pilot. In one implementation of this embodiment, there is a second forward-field area of the cockpit that begins at the top of the console in front of the co-pilot. In another implementation of this embodiment, the emulated HMI device is operably placed near the forward-field area of the cockpit. For example, the emulated HMI device can be placed just below the forward-field area so that the display of the HMI devices appears as a seamless extension of the forward-field area.

The emulated HMI device includes a display that serves as a low cost alternative to the currently available and generally expensive display units. The currently available and generally expensive display units include a 777 multifunction display (MFD), an EPIC MFD, an A661 MFD, a control display unit (CDU), or MCDU. The emulated HMI device is also referred to herein as a "computing-platform emulator" or an "MCDU emulator".

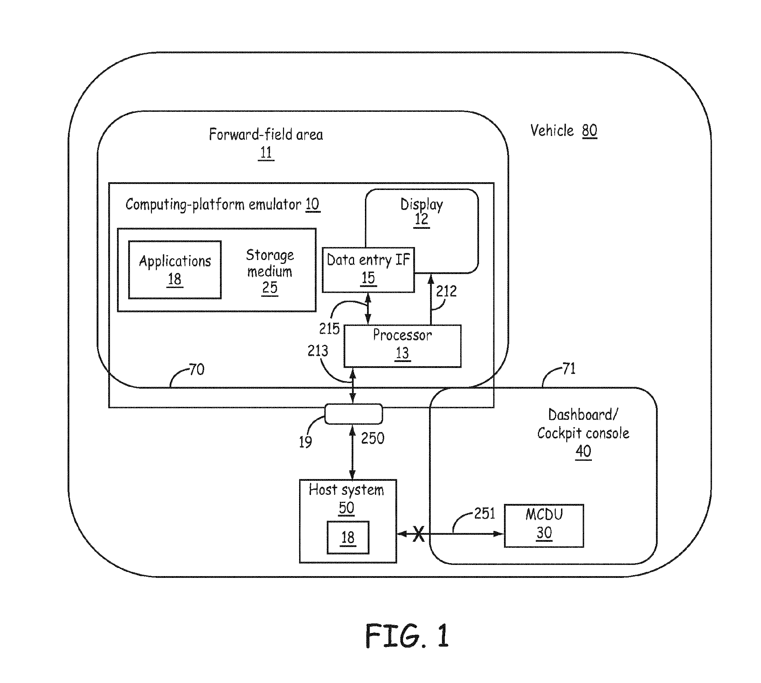

Figure 1 is a block diagram of one embodiment of a computing-platform emulator 10 in a vehicle 80 in accordance with the present invention. The vehicle 80 houses the host system 50 and the computing-platform emulator 10. In the exemplary embodiment shown in Figure 1, the vehicle 80 also houses an MCDU 30 positioned in a dashboard 40 (such as, a cockpit console 40) of the vehicle 80. The computing-platform emulator 10 emulates the MCDU 30 using the standard MCDU wiring and protocol interface. In one implementation of this embodiment, there is no MCDU 30 positioned in a dashboard 40 or a cockpit console 40 of the vehicle 80.

The computing-platform emulator 10 is operationally positioned in the forward-field area 11 of the vehicle 80. The computing-platform emulator 10 includes a display 12, a processor 13, a data-entry interface 15, at least one electronic interface 19, and software applications 18, which are stored in a storage medium 25. The processor 13 is communicatively coupled to the display 12 via connection 212. The processor 13 receives display commands from the host system 50. The processor 13 sends the received display commands to the display 12 via connection 212. The display commands received at the display 12 are used to display a message or an image on the screen of the display 12. The display 12, the data-entry interface 15, and the at least one electronic interface function 19 function as a multifunction control display unit.

The display 12 is operationally positioned in a forward-field area 11 of a vehicle 80. In one implementation of this embodiment, the display 12 is attached to a top edge 71 of the dashboard 40, which is aligned with a bottom edge 70 of the forward-field area 11. In another implementation of this embodiment, the display 12 is operationally positioned just below the forward-field area 11. For example, the display 12 is attached to the top edge 71 of the dashboard 40 and is positioned over the dashboard 40.

The data-entry interface 15 is communicatively coupled to the processor 13 via connection 215. The data-entry interface 15 is shown in Figure 1 to partially overlap the display 12. In one implementation of this embodiment, the data-entry interface 15 is part of the display 12. In this case, the data-entry interface 15 is a touch screen. A touch screen is an electronic visual display that senses (detects) the presence and location of a touch (a button press) within an area of the display. Information indicative of a button press is sent from the data-entry interface 15 to the processor 13 via connection 215. In another implementation of this embodiment, the data-entry interface 15 is separate from the display. In this case, the data-entry interface 15 is a keyboard configured to detect a press of a keypad on the keyboard (a keyboard press). Information indicative of a keyboard press is sent from the data-entry interface 15 to the processor 13 via connection 215. The data-entry interface 15 can be an electronic keyboard on a wireless portable device. In this latter embodiment, the computing-platform emulator 10 is the wireless portable device 10.

The at least one electronic interface 19 interfaces to the processor 13 via connection 213. The electronic interface 19 is a protocol/physical interface 19. The at least one electronic interface 19 interfaces to the host system 50 via connection 250. The electronic interface 19 can be a serial port (e.g., an ARINC 739/429, a RS232, a RS422, an Ethernet, a FireWire or a USP port) or parallel port as required by the host system 50.

Exemplary applications 18 include CPDLC applications or other applications that typically reside in the host system 50. In one implementation of this embodiment, the applications are non-avionics applications. The applications 18 are executed by the processor 13. The host system 50 implements or includes at least one protocol for use on the computing-platform emulator 10.

Signals are sent from the host system 50 to the processor 13 via the connection 250, electronic interface 19, and connection 213 using a protocol shared by the host system 50 and the computing-platform emulator 10. Likewise, signals are sent from the processor 13 to the host system 50 via the connection 213, electronic interface 19, and connection 250 using the protocol shared by the host system 50 and the computing-platform emulator 10. For example, the information indicative of a button press or a keyboard press that was received at the processor 13 from the data-entry interface 15 is sent from the processor 13 to the host system 50 via connection 213, the electronic interface 19, and the connection 250.

In one implementation of this embodiment, the connection 250 is a wireless communication link 250. In another implementation of this embodiment, the connection 250 is a hardwired communication link 250.

The host system 50 is not connected to the MCDU 30 via the prior art connection 251 as is indicated by the X over the connection 251. In a prior art system, there is no computing-platform emulator 10 and the host system 50 is connected to the MCDU 30 via the connection 251.

In one implementation of this embodiment, the host system 50 implements a controller pilot data link communication (CPDLC) application. In one implementation of this embodiment, the host system 50 is a line replaceable unit (LRU) 50 supporting at least one MCDU protocol. In another implementation of this embodiment, the host system 50 is a flight management system 50 supporting MCDU protocol. In yet another implementation of this embodiment, the host system 50 is a communication management unit (CMU) 50 supporting MCDU protocol.

In order to permit a user to view the display 12 in (or near) a forward-field area 11, the computing-platform emulator 10 is positioned in (or near) the forward-field area 11 and the host system 50 is attached to the computing-platform emulator 10 by connecting the connection 250 to the electronic interface 19. The connection 250 between the computing-platform emulator 10 and the host system 50 replaces the connection 251 between the host system 50 and the MCDU 30 in the dashboard or cockpit console 40.

From the host system 50 perspective, the emulated computing-platform emulator 10 appears to be identical to the MCDU 30. The host system software (applications 18) and protocol do not need to be changed when the host system 50 is connected to the computing-platform emulator 10 rather than the MCDU 30. Thus, the computing-platform emulator 10 is a physical HMI device that replaces the MCDU. The host system 50 sends input to the computing-platform emulator 10 and receives output from the computing-platform emulator 10 in the same manner that it is able to send input to the MCDU 30 and receive output from the MCDU 30 when the connection 251 is established. Thus the computing-platform emulator 10 is also referred to herein as an "MCDU emulator 10".

The emulation of the MCDU supports multiple options for the look and feel of MCDU operation and communication. For example, the display 12 may look similar to an MCDU 30 or it may look different from the MCDU 30. The system protocol used to interface the host system 50 to the MCDU emulator 10 is the same as system protocol used to interface the host system 50 to the MCDU 30. Multifunction Display Units (MFDs) rather than MCDUs can also be emulated by the computing-platform emulator 10.

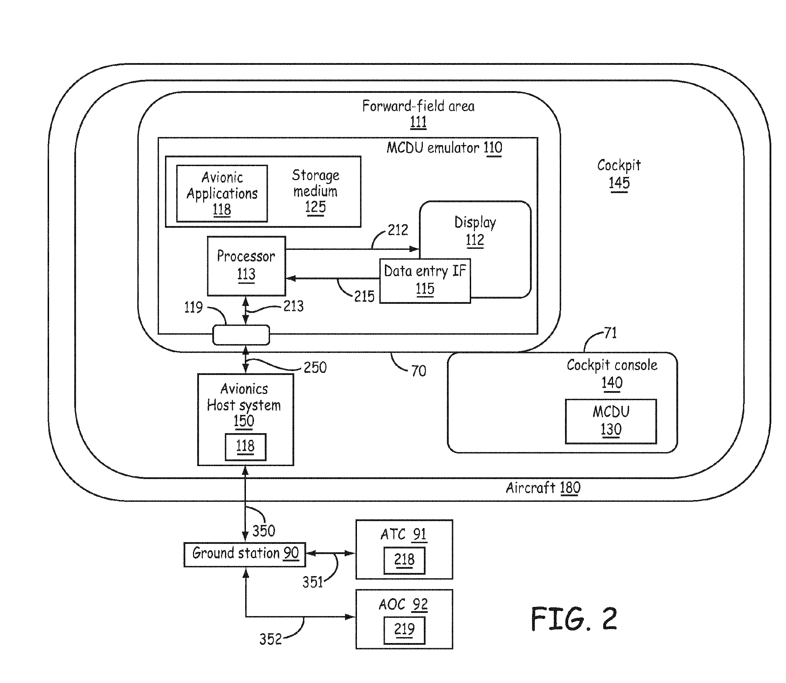

Figure 2 is a block diagram of one embodiment of a MCDU emulator 110 in an aircraft 180 in accordance with the present invention. The aircraft 180 houses the avionics host system 150 and the MCDU emulator 110 in the cockpit 145 of the aircraft 180. In the exemplary embodiment shown in Figure 2, the aircraft 180 also houses an MCDU 130 positioned in the cockpit console 140 in the cockpit 145 of the aircraft 180. The MCDU emulator 110 emulates the MCDU 30 using the standard MCDU wiring and protocol interface. In one implementation of this embodiment, there is no MCDU 130 positioned in the cockpit console 140 of the aircraft 180. The avionics host system 150 is communicatively coupled to a ground station 90 via a wireless communication link 350. The ground station 90 is communicatively coupled to an air traffic control (ATC) 91 via a communication link 351 and/or to an airline operational control (AOC) 92 via communication link 352. The air traffic control 91 includes applications 218, which are peer applications to the avionics applications 118 in the MCDU emulator 110. The airline operational control (AOC) 92 includes applications 219, which are peer applications to the avionics applications 118 in the MCDU emulator 110. The ground station 90 can establish communication between the aircraft 180 and the both the air traffic control 91 and the airline operational control 92 at the same time.

The communication link 350 is a wireless communication link. The communication link 351 can be one of a wireless communication link or a hardwired communication link.

The MCDU emulator 110 is operationally positioned in the forward-field area 111 of the aircraft 180. The MCDU emulator 110 includes a display 112, a processor 113, a data-entry interface 115, at least one electronic interface 119, and software applications 118, which are stored in a storage medium 125. The processor 113 is communicatively coupled to the display 112 via connection 212. The processor 113 receives display commands from the host system 150. The processor 113 sends the received display commands to the display 112 via connection 212. The display commands received at the display 112 are used to display a message or an image on the screen of the display 112.

The display 112 is operationally positioned in a forward-field area 111 of the cockpit in the aircraft 180. In one implementation of this embodiment, the display 112 is attached to a top edge 171 of the cockpit console 140, which is aligned with a bottom edge 170 of the forward-field area 111. In another implementation of this embodiment, the display 112 is operationally positioned just below the forward-field area 111. For example, the display 112 is attached to the top edge 171 of the cockpit console 140 and is positioned over the cockpit console 140.

The data-entry interface 115 is communicatively coupled to the processor 113 via connection 215. The data-entry interface 115 is shown in Figure 2 to partially overlap the display 112. The data-entry interface 115 is part of the display 112 or is separate from the display. For example, the data-entry interface 115 can be a touch screen or a keyboard. Information indicative of a button or keyboard press is sent from the data-entry interface 115 to the processor 113 via connection 215. The data-entry interface 115 can be an electronic keyboard on a wireless portable device. In this latter embodiment, the MCDU emulator 110 is the wireless portable device 110.

The at least one electronic interface 119 interfaces to the processor 113 via connection 213. The at least one electronic interface 119 interfaces to the avionics host system 150 via connection 250. The electronic interface 119 can be a serial port (e.g., an Ethernet, ARINC 739/429, FireWire or USP port) or parallel port as required by the avionics host system 150.

Exemplary applications 118 include CPDLC applications or other applications (e.g., airline operational control (AOC) applications, air traffic control (ATC) applications, radio management applications, central maintenance computer applications, aircraft condition monitoring system applications, and other maintenance applications) that typically interface with an MCDU and reside in the avionics host system 150. The applications 118 are executed by the processor 113. The avionics host system 150 implements or includes at least one protocol for use on the MCDU emulator 110.

Signals are sent from the avionics host system 150 to the processor 113 via the connection 250, electronic interface 119, and connection 213 using a protocol shared by the avionics host system 150 and the MCDU emulator 110. Likewise, signals are sent from the processor 113 to the avionics host system 150 via the connection 213, electronic interface 119, and connection 250 using the protocol shared by the avionics host system 150 and the MCDU emulator 110. For example, the information indicative of a button press or a keyboard press that was received at the processor 113 from from the data-entry interface 115 is sent from the processor 13 to the host system 50 via connection 213, the electronic interface 19, and the connection 250.

In one implementation of this embodiment, the connection 250 is a wireless communication link 250. In another implementation of this embodiment, the connection 250 is a hardwired communication link 250.

In one implementation of this embodiment, the avionics host system 150 implements a controller pilot data link communication (CPDLC) application. In one implementation of this embodiment, the avionics host system 150 is a line replaceable unit (LRU) 50 supporting at least one MCDU protocol. In another implementation of this embodiment, the avionics host system 150 is a flight management system 50 supporting MCDU protocol. In yet another implementation of this embodiment, the avionics host system 150 is a communication management unit (CMU) 50 supporting MCDU protocol.

The at least one MCDU protocol includes one or more of Avionics Full Duplex Ethernet (AFDX) protocol, Aircraft Radio Incorporated , ARINC 739/429 protocol, and future developed onboard communication protocols. The MCDU protocol is also referred to herein as a standard protocol.

In order to permit a user to view the display 112 in (or near) a forward-field area 111, the MCDU emulator 110 is positioned in (or near) the forward-field area 111 and the avionics host system 150 is attached to the MCDU emulator 110 by connecting the connection 250 to the electronic interface 119.

From the avionics host system 150 perspective, the emulated MCDU emulator 110 appears identical to the MCDU 130. The host system software (avionics applications 118) and protocol do not need to be changed when the avionics host system 150 is connected to the MCDU emulator 110 rather than the MCDU 130. Thus, the MCDU emulator 110 is a physical HMI device that replaces the MCDU 130. The avionics host system 150 sends input to the MCDU emulator 110 and receives output from the MCDU emulator 110 in the same manner that would able to send input to the MCDU 130 and receive output from the MCDU 130 if a connection between the MCDU 130 and the avionics host system 150 were established. Thus the MCDU emulator 110 is also referred to herein as an "MCDU emulator 10".

The emulation of the MCDU supports multiple options for the look and feel of MCDU operation and communication. For example, the display 112 may look similar to an MCDU 130 or it may look different from the MCDU 130. The system protocol used to interface the avionics host system 150 to the MCDU emulator 10 is the same as system protocol used to interface the avionics host system 150 to the MCDU 130. Multifunction Display Units (MFDs) rather than MCDUs can also be emulated by the MCDU emulator 110.

In another implementation of this embodiment, MCDU emulator 110 resides within an electronic flight bag (EFB). EFBs are currently installed on many existing aircraft. EFBs have to be installed or upgraded to support the functionality described herein. In this case, the MCDU emulator 110 functions as a level 3 EFB supporting the level C HMI emulation application.

The currently available MCDUs do not support the display of any graphical information. In one implementation of this embodiment, MCDU emulator 110 residing within an EFB supports graphical representation of textual and graphical messages to add additional value to the crew. For example, such graphical representation of textual and graphical messages provides quicker comprehension and improved communication from the ground crew to the flight crew. In one implementation of this embodiment, the MCDU emulator 110 receives graphical messages for display along with the textual message (e.g., RTCA SC-214 taxi graphical) from the avionics host system 150.

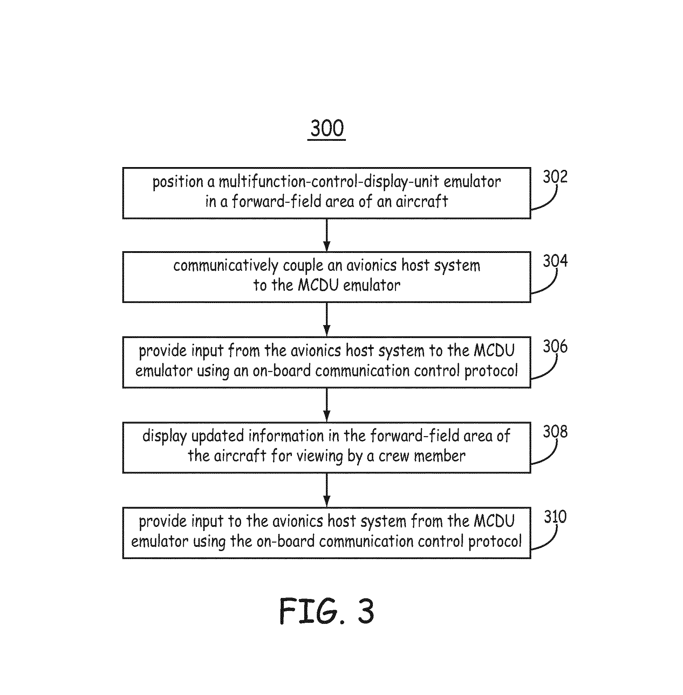

Figure 3 is a method 300 to display an avionics application in a forward-field area of a cockpit of an aircraft. The method 300 is described with reference to the multifunction-control-display-unit emulator 110 shown in Figure 2. It is to be understood that method 300 can be implemented using the computing-platform emulator 10 shown in Figure 1 as is understandable by one skilled in the art who reads this document.

At block 302, multifunction-control-display-unit (MCDU) emulator 110 is positioned in a forward-field area 111 of an aircraft 180. In one implementation of this embodiment, the multifunction-control-display-unit (MCDU) emulator 110 is permanently installed in the forward-field area 111 of the aircraft 180. In this case, block 302 is implemented one time. The MCDU emulator 110 is communicatively coupled to an avionics host system 150 in the aircraft 180. As described above with reference to Figure 2, the MCDU emulator 110 includes a display 112, a processor 113 communicatively coupled to the display 112, a data-entry interface 115 communicatively coupled to the processor 113, and at least one electronic interface 119 to interface the avionics host system 150 to the processor 113.

The MCDU emulator 110 is brought by a flight crew member or a technician into the cockpit 145 of an aircraft 180. The MCDU emulator 110 is operationally positioned in the forward-field area 111 of the cockpit 145, typically prior to take off of the aircraft 180. The function of multifunction-control-display-unit emulator 110 was described above with reference to Figure 2.

At block 304, an avionics host system 150 is communicatively coupled to the MCDU emulator 110. The connection 250, electronic interface 119, and connection 214 communicatively couple the avionics host system 150 to the processor 113. In one implementation of this embodiment, the connection 250 is a wireless communication link. In another implementation of this embodiment, the connection 250 is a hardwired communication link.

At block 306, input from the avionics host system 150 is provided to MCDU emulator 110 using an on-board communication control protocol. The input is received at the MCDU emulator 110 via the electronic interface 119. In this manner, at least one avionics application in the avionics host system 150 is used to display messages and/or images on the display 112 on the MCDU emulator 110. The display 112 is positioned in (or near) the forward-field area 111 of the cockpit 145.

At block 308, updated information is displayed on the display 112 in the forward-field area 111 of the aircraft 180 for viewing by a crew member. Responsive to the information on the display 112, the crew member may provide input to the data-entry interface 115. Specifically, the crew member may touch a touch screen or a keypad responsive to the information on the display 112. At block 310, input is provided to the avionics host system 150 from the MCDU emulator 110 using the on-board communication control protocol. The input is triggered by a button press or at least one press on the data-entry interface.

In one implementation of this embodiment, MCDU emulator 110 or computing-platform emulator 10 is a laptop. In another implementation of this embodiment, the MCDU emulator 110 or computing-platform emulator 10 is a 3G or 4G wireless device, which is upgraded with the required protocol and applications, and which includes an interface to communicatively couple to the host system 50 or the avionics host system 150. In yet another implementation of this embodiment, the MCDU emulator 110 or computing-platform emulator 10 is a future developed portable device, which is upgraded with the required protocol and applications, and which includes an interface to communicatively couple to the host system 50 or the avionics host system 150.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A computing-platform emulator (10) for use on a vehicle (80), the computing-platform emulator comprising:
a display (12);
a processor (13) communicatively coupled to the display;
a data-entry interface (15) communicatively coupled to the processor; and
at least one electronic interface (19) to interface a host system (50) in the vehicle to the processor, wherein the host system implements at least one application (18) and at least one protocol for use on the computing-platform emulator, wherein the display, the data-entry interface, and the at least one electronic interface function as a multifunction control display unit.

2. The computing-platform emulator (110) of claim 1, wherein the vehicle (80) is an aircraft (180), the host system (50) is an avionics host system (150), the computing-platform emulator (10) is a multifunction-control-display-unit emulator (110), and the display (112) is operationally positioned in a forward-field area (111) of a cockpit (145) of the aircraft.

3. The computing-platform emulator (110) of claim 2, wherein the at least one application (118) in the avionics host system (150) includes a controller pilot data link communication (CPDLC) application, and wherein the CPDLC application in the avionics host system uses the computing-platform emulator as a data entry device and as a display device.

4. The computing-platform emulator (110) of claim 2, wherein the avionics host system (150) is a flight management system supporting ground station control.

5. The computing-platform emulator (110) of claim 2, wherein the at least one protocol for use on the computing-platform emulator is at least one on-board communication control protocol.

6. The computing-platform emulator (110) of claim 2, wherein the multifunction-control-display-unit emulator (110) resides within an electronic flight bag.

7. The computing-platform emulator (110) of claim 1, wherein the host system is a communications management unit.

8. A method to display an avionics application (118) in a forward-field area (111) of a cockpit (145) of an aircraft (180), the method comprising:
positioning a multifunction-control-display-unit emulator (110) in the forward-field area of the aircraft, the multifunction-control-display-unit emulator including:
a display (112),
a processor (113) communicatively coupled to the display,
a data-entry interface (115) communicatively coupled to the processor, and
at least one electronic interface (119) to interface and an avionics host system (150) to the processor;
communicatively coupling the avionics host system (150) to the multifunction-control-display-unit emulator via the at least one electronic interface;
providing input from the avionics host system to the multifunction-control-display-unit emulator using an on-board communication control protocol; and
providing input to the avionics host system from the multifunction-control-display-unit emulator using the on-board communication control protocol.

9. The method of claim 8, further comprising displaying updated information in the forward-field area (111) of the aircraft (180) for viewing by a crew member.

10. The method of claim 8, wherein providing the input from the avionics host system (150) to the multifunction-control-display-unit emulator (110) comprises:
receiving the input at the multifunction-control-display-unit emulator via the data-entry interface (119).
